**Europäisches Patentamt**

**European Patent Office**

**Office européen des brevets**

(19)

(11) Numéro de publication: **0 022 682**
**B1**

(12) # FASCICULE DE BREVET EUROPEEN

(45) Date de publication du fascicule du brevet:
01.12.82

(51) Int. Cl.³: **G 11 B 7/12,** G 11 B 7/08

(21) Numéro de dépôt: **80400771.4**

(22) Date de dépôt: **30.05.80**

(54) Tête de lecture optique à source laser à semi-conducteur, et dispositif de lecture par réflexion d'un support d'information comportant une telle tête optique.

(30) Priorité: **29.06.79 FR 7916898**

(43) Date de publication de la demande:
**21.01.81 Bulletin 81/3**

(45) Mention de la délivrance du brevet:
**01.12.82 Bulletin 82/48**

(84) Etats contractants désignés:
**DE GB IT NL SE**

(56) Documents cités:
**FR-A-2 325 987**
**FR-A-2 385 173**
**US-A-3 530 324**
**US-A-3 668 404**
**PATENTS ABSTRACTS OF JAPAN, vol. 2, no. 77, 17 juin**
**1978, page 3607E78**
**PATENTS ABSTRACTS OF JAPAN, vol. 2, no. 62, 11 mai**
**1978, page 1995E78. KoKai No. 53-28405**
**PATENT ABSTRACTS OF JAPAN vol. 2, no. 62, 11 mai**
**1978, page 1995E78. Kokai No. 53-28404**

(73) Titulaire: **THOMSON-CSF, 173, Boulevard Haussmann,**
**F-75379 Paris Cedex 08 (FR)**

(72) Inventeur: **Arquie, Louis, "THOMSON-CSF"**
**SCPI 173, bld Haussmann, F-75360 Paris Cedex 08 (FR)**
Inventeur: **Bricot, Claude, "THOMSON-CSF"**
**SCPI 173, bld Haussmann, F-75360 Paris Cedex 08 (FR)**
Inventeur: **Thirouard, Michel, "THOMSON-CSF"**
**SCPI 173, bld Haussmann, F-75360 Paris Cedex (FR)**

(74) Mandataire: **Lepercque, Jean et al, THOMSON-CSF**
**SCPI 173, Bld Haussmann, F-75379 Paris Cedex 08 (FR)**

## Tête de lecture optique à source laser à semi-conducteur, et dispositif de lecture par réflexion d'un support d'information comportant une telle tête optique

L'invention se rapporte au domaine des disques supports d'information, enregistrables et lisibles optiquement, l'information étant enregistrée sous forme d'une modulation de relief à deux niveaux traduisant un signal vidéo modulé en fréquence, vidéodisque, un signal audio modulé, disque audio, ou des signaux binaires lorsqu'un tel support est utilisé comme mémoire informatique.

L'invention a plus particulièrement pour objet une tête de lecture optique à source laser à semiconducteur comportant un nombre d'éléments réduit pour former une tête optique de faible poids, de faible encombrement de prix réduit. L'invention a également pour objet un dispositif optique d'enregistrement et/ou de lecture comportant une tête optique.

Dans certaines têtes optiques à source laser utilisées actuellement pour l'enregistrement ou la lecture de disques supports d'information, la source laser est placée sur l'axe du système optique de lecture ou d'enregistrement et éclaire la pupille d'entrée du système optique symétriquement par rapport à l'axe tant dans la direction y tangentielle à la piste portée par le support que dans la direction radiale x orthogonale à y dans le plan du support. Dans un dispositif optique destiné à une lecture par réflexion comportant une telle tête optique, le signal de lecture et les signaux d'écarts radial et vertical étant issus du rayonnement réfléchi par le disque, il est nécessaire de prévoir des éléments optiques supplémentaires destinés à séparer le rayonnement réfléchi du rayonnement incident. De manière classique, cette séparation est obtenue en plaçant successivement sur l'axe optique un cube séparateur fonctionnant par biréfringence en fonction de la polarisation du rayonnement qu'il reçoit et une lame quart d'onde. La source laser étant polarisée linéairement, le rayonnement réfléchi par le support qui traverse la lame quart d'onde a une polarisation qui a tourné de $\frac{\pi}{2}$ par rapport à celle du rayonnement issu de la source et ce rayonnement est dévié par le cube. Une telle tête optique comporte un nombre important d'éléments destinés à coopérer qui constituent un ensemble encombrant, dont le prix de revient est assez élevé, et dont le poids est trop élevé pour qu'une telle tête puisse être déplacée radialement rapidement.

Quelles que soient la tête et la source d'énergie lumineuse utilisées, il est nécessaire de discriminer le faisceau incident, c'est à dire produit par la source, du faisceau réfléchi avant de transmettre celui-ci à des moyens de détection. Dans l'art connu, plusieurs solutions à ce problème ont été proposées. La majeure partie de ces solutions consiste à obtenir un éclairement dissymétrique de la pupille d'entrée des moyens de projection de faisceau en occultant une partie du faisceau incident, ce au prix d'une perte énergétique allant typiquement jusqu'à 50% du faisceau émis.

Cette solution est décrite par exemple dans les abrégés de brevet japonnais parus dans «Patents Abstracts of Japan», volume 2, no. 62, 11 MAI 1978, page 1995 E 78 correspondant aux demandes de brevets japonnais JP-A-5 328 404 et JP-A-5 328 405.

Il est également connu d'utiliser des éléments déviateurs du type miroir semi-transparent placé sur le trajet commun des faisceaux incidents et réfléchis. Une telle solution est décrite par exemple dans la demande FR-A-2 325 987. Cet élément introduit également une perte d'énergie. En outre, il est décrit dans cette demande de brevet une méthode permettant la défocalisation du spot de lecture obtenu par l'éclairement dissymétrique de la pupille d'entrée des moyens de projection, soit en décalant légèrement l'axe optique d'émission de la source par rapport à l'axe optique de la tête de lecture (dans une première variante) ces deux axes restant parallèles, soit en utilisant un cache (dans une seconde variante).

Enfin, il est également connu d'utiliser un prisme pour dévier le faisceau réfléchi.

Une première variante est décrite dans le brevet US-A-3 668 404. Selon ce brevet, un premier système optique diffracte le faisceau émis. Une partie des ordres de diffraction est utilisée et après réflexion et déviation par un prisme retransmis via un second système optique à des moyens de détection.

Une seconde variante est décrite dans la demande de brevet FR-A-2 385 173. Un dispositif a prisme placé sur le trajet commun des faisceaux incident et réfléchi prélève une partie de ce dernier.

Aucune des solutions de l'art connu, illustrées par les documents sus-mentionnés, n'autorise une utilisation réellement optimisée d'un faisceau laser et sont pour la plupart orientées vers des systèmes munis de laser à gaz de plus grande puissance.

L'invention propose une tête optique à source laser ne présentant pas les inconvénients susmentionnés, dont les éléments peuvent être contenus dans un cylindre dont le diamètre ne dépasse pas celui de l'objectif de lecture et dont la structure est particulièrement adaptée au faisceau de lecture fourni par une source laser à semiconducteur dont la face émissive est une fenêtre rectangulaire, le faisceau issu d'un tel laser ayant des caractéristiques de divergence différentes suivant deux axes othogonaux. Une telle tête de lecture peut également comporter, associée aux mêmes éléments optiques de projection, une source laser à semi-conducteur permettant l'enregistrement de l'information sur le support, l'enregistrement et la lecture pouvant alors être effectués successivement aux moyens de deux spots très voisins.

L'invention à donc pour objet une tête de lecture optique à source à laser semi-conducteur de lecture comportant un dispositif optique de projection destiné à former dans le plan d'un support d'information réfléchissant un spot de lecture, image de la source par ce dispositif, le laser ayant une face émissive délimitée par une fenêtre rectangulaire, le faisceau issu du laser éclairant de façon dissymétrique la pupille d'entrée du dispositif optique de projection, caractérisé en ce que, la totalité du faisceau émis par la source à laser étant transmise au dispositif optique de projection, la face émissive du laser présente un angle déterminé avec l'axe optique du dispositif optique de projection pour obtenir ladite dissymétrie, et le faisceau réfléchi par ledit support d'information éclaire également de façon dissymétrique la pupille d'entrée dudit dispositif, les portions de ladite pupille d'entrée éclairées par les deux faisceaux étant adjacentes et recouvrant la majeure partie de la surface de cette pupille; et en ce qu'elle comprend un élément déviateur placé uniquement sur le trajet du faisceau réfléchi émergeant du dispositif de projection et déviant faiblement ce faisceau de manière à décaler l'image formée par réflexion sur le support d'information par rapport à la face émissive du laser (1), des cellules de détection ($A_1$ à $B_2$) étant prévues pour détecter le faisceau ainsi dévié.

L'invention a également pour objet un dispositif de lecture par réflexion d'un support d'information comportant une telle tête optique selon les revendications 6 et 7.

L'invention sera mieux comprise et d'autres caractéristiques apparaitront à l'aide de la description qui suit en référence aux figures annexées.

La figure 1 représente le schéma simplifié d'une tête optique de lecture suivant l'invention;

La figure 2 représente un premier mode de réalisation de la tête de lecture optique suivant l'invention;

Les figures 3a, 3b et 3c représentent les taches d'éclairement formées dans le plan $P_1$ de la figure 2 suivant que l'erreur de focalisation est nulle, négative ou positive;

La figure 4 représente, partiellement un second mode de réalisation de la tête de lecture optique;

Les figures 5a, 5b et 5c représentent les taches d'éclairement formées dans le plan $P_2$ de la figure 4 suivant que l'erreur de focalisation est nulle, négative ou positive;

Les figures 6a, 6b et 6c représentent les taches d'éclairement formées dans le plan de détection suivant que l'erreur radiale est nulle, négative et positive;

La figure 7 représente un troisième mode de réalisation de la tête de lecture optique permettant également la fonction enregistrement.

La tête optique suivant l'invention est conçue pour utiliser au mieux le rayonnement issu d'une source laser à semi-conducteur et comporte un minimum de composants optiques ce qui la rend légère et donc particulièrement facile à déplacer.

En effet, une source laser à semi-conducteur a une face de sortie dont les dimensions, de l'ordre du micromètre, peuvent être par exemple 1 μm × 5 μm. En pratique la couche émissive a une épaisseur inférieure au micromètre et la largeur de la couche émissive est inférieure à 5 μm. Le rapport entre les deux dimensions de la couche émissive varie de 7 à 3 pour les lasers ayant une puissance suffisante pour l'enregistrement. Le faisceau émis par une telle source, par la fenêtre ainsi déterminée, correspond à peu près à l'ordre central crée par diffraction par une fenêtre rectangulaire, les ordres supérieurs étant de niveaux très faibles par rapport à cet ordre central car la répartition d'intensité dans la fenêtre n'est pas constante.

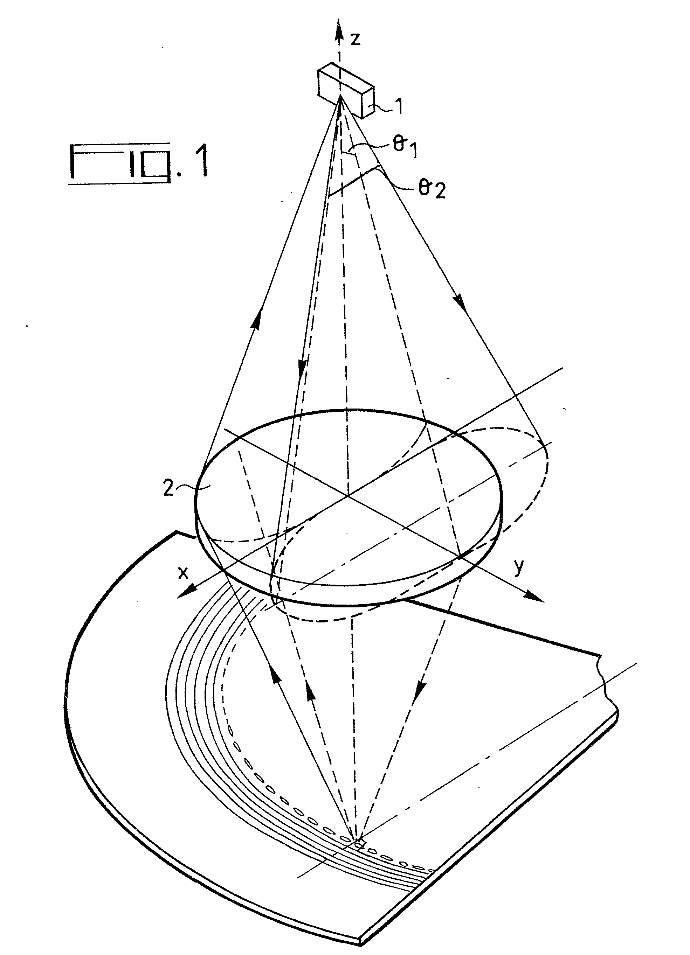

La figure 1 représente le faisceau émis par une telle source laser à semi-conducteur, 1. Son ouverture peut être par exemple $\theta_1 = 8°$ dans le sens de la grande dimension de la face d'émission et $\theta_2 = 25°$ dans le sens de l'autre dimension. La face de sortie du laser 1 est inclinée par rapport à l'objectif 2 de façon que seule une moitié de cet objectif soit éclairée par le faisceau émis par la source. Compte-tenu de la forme de la tache d'éclairement, une grande partie du faisceau est captée par l'objectif 2, bien que seule une moitié de cet objectif soit éclairée. Le support réfléchissant étant parallèle au plan x, y de l'objectif, le faisceau réfléchi par le support est renvoyé vers le demi-objectif non éclairé par le faisceau aller. Si aucun moyen supplémentaire n'était prévu, l'image du point de focalisation sur le disque se formerait dans la face de sortie de la source laser à semi-conducteur. Il serait possible d'obtenir un signal de lecture dans de telles conditions. En effet, l'expérience montre que le rayonnement réfléchi focalisé dans la face de sortie du laser, dont l'intensité est une fonction directe de l'information enregistrée sur le disque (un trou non réfléchissant conduisant à une baisse de l'intensité du rayonnement réfléchi, alors qu'un non-trou réfléchissant conduit à une intensité maximale) contribue directement à augmenter ou à diminuer le niveau de sortie du rayonnement laser. Par conséquent une photodiode détectrice placée sur la face arrière du laser délivre un signal variant comme le rayonnement de sortie du laser semi-conducteur et donc directement lié à l'information enregistrée sur le disque. Ce signal peut donc être utilisé comme signal de lecture. Cependant, pour une lecture correcte, il est également nécessaire d'obtenir un signal caractéristique de l'erreur de focalisation suivant z et un signal d'erreur radiale suivant x pour le suivi de piste. Ces deux signaux ne peuvent pas être détectés directement. Il est donc nécessaire de former une image dans un plan de détection, pour obtenir ces signaux. Pour que l'encombrement de la tête optique soit minimal, cette image est formée au voisinage de l'axe optique en déviant faiblement le faisceau de retour réfléchi par le disque par exemple, au moyen d'un prisme.

La figure 2 représente un schéma dans le plan yz de la tête optique suivant l'invention. Elle comporte une source laser à semi-conducteur 1, et deux objectifs 11 et 12 formant un système optique afocal, tel que la face de sortie de la source 1 et le disque soient situés dans des plans conjugués lorsqu'il y a pas d'erreur de focalisation, de façon que le faisceau de rayonnement entre les deux objectifs soit un faisceau parallèle. Ainsi, le faisceau réfléchi par le disque éclaire la demi-pupille de l'objectif 12 non éclairée par le faisceau aller.

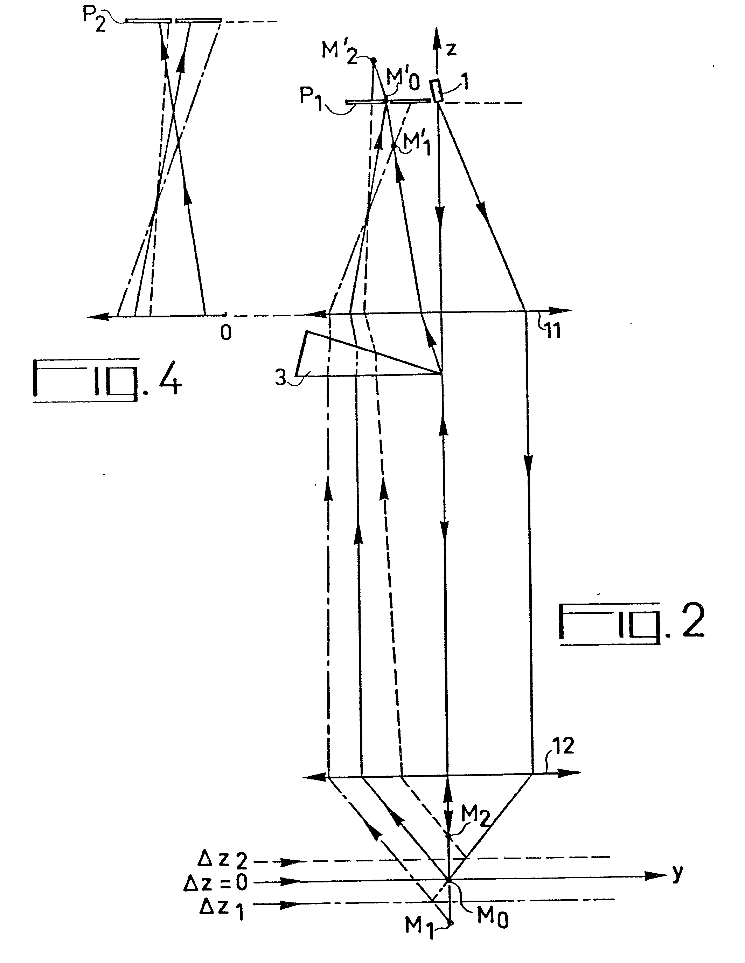

Lorsque la surface du disque est confondue avec le plan focal de l'objectif 12, le faisceau retour émergeant de cet objectif est parallèle. Ce faisceau est dévié au moyen d'un prisme 3, dont l'arête est dirigée suivant l'axe x orthogonal au plan de la figure. Ce faisceau éclaire alors la demi-pupille de l'objectif 11 non éclairée par le faisceau aller et est focalisé en un point $M'_0$ conjugué par le système optique du point de focalisation $M_0$ sur le disque, ce point étant ainsi décalé par rapport à l'axe optique z, cette disposition peut permettre de placer un ensemble de cellules de détection dans le plan de même cote que la source. Ces cellules sont disposées en carré dans les quatre secteurs définis par des axes suivant x et y qui se coupent en $M'_0$ (Fig. 3a). La somme des signaux issus de ces cellules est le signal de lecture. Le signal d'erreur de focalisation est obtenu par différence entre les sommes des signaux issus des cellules ayant la même ordonnée y. En effet le rayon lumineux passant par le centre de l'objectif 12 normal au support est réfléchi dans la même direction quelle que soit la cote verticale du support; il est donc toujours dévié de la même manière par le prisme 3 et se projette donc dans le plan des cellules à une ordonnée $y_0$ invariable quelle que soit la position du support par rapport au point de focalisation. Par contre l'autre rayon extrême se projette à une ordonnée y variable avec cette position. Lorsque le plan du support est décalé de $\Delta z_1$ négatif, le faisceau réfléchi par ce support semble provenir d'un point $M_1$ plus éloigné par rapport à l'objectif que $M_0$. En conséquence le faisceau émergeant de l'objectif 12 est légèrement convergent et est donc focalisé par l'objectif 11 en un point $M'_1$ plus près de cet objectif que le point $M'_0$. Le rayon passant par le centre de l'objectif 12 étant invariant, la tache d'éclairement formée dans le plan des cellules est élargie et éclaire seulement les cellules $A_1$ et $A_2$ ayant une ordonnée y positive (fig. 3b). A l'inverse, lorsque le support se rapproche de l'objectif 12, l'écart de focalisation $\Delta z_2$ étant positif, le rayonnement réfléchi par ce support semble provenir d'un point $M_2$ plus proche de l'objectif 12 que $M_0$. En conséquence, le rayonnement émergeant de cet objectif est légèrement divergent et l'image de ce point $M_2$ par le système optique se forme en $M'_2$ plus éloigné de l'objectif 11 que $M'_0$. Par conséquent, dans le plan des cellules, la tache d'éclairement est élargie et éclaire seulement les cellules $B_1$ et $B_2$ ayant une ordonnée y négative (Fig. 3c).

En pratique, il peut être difficile de placer les cellules de détection dans un plan situé à la même cote que la source lorsque l'on désire également obtenir au moyen de ces cellules le signal de lecture. En effet, la distance intercellules, pour deux cellules adjacentes est au moins égale à quelques dizaines de micromètres. Or la tache d'éclairement formée dans le plan de même côte que la source a des dimensions du même ordre que la tache lumineuse formée dans la face de sortie de la source, c'est à dire de l'ordre du micromètre. En conséquence, lorsque le faisceau aller est bien focalisé sur le disque, l'écart de focalisation étant maintenu égal à zéro, la tache lumineuse de retour est formée dans l'espace intercellules et aucun signal n'est détecté.

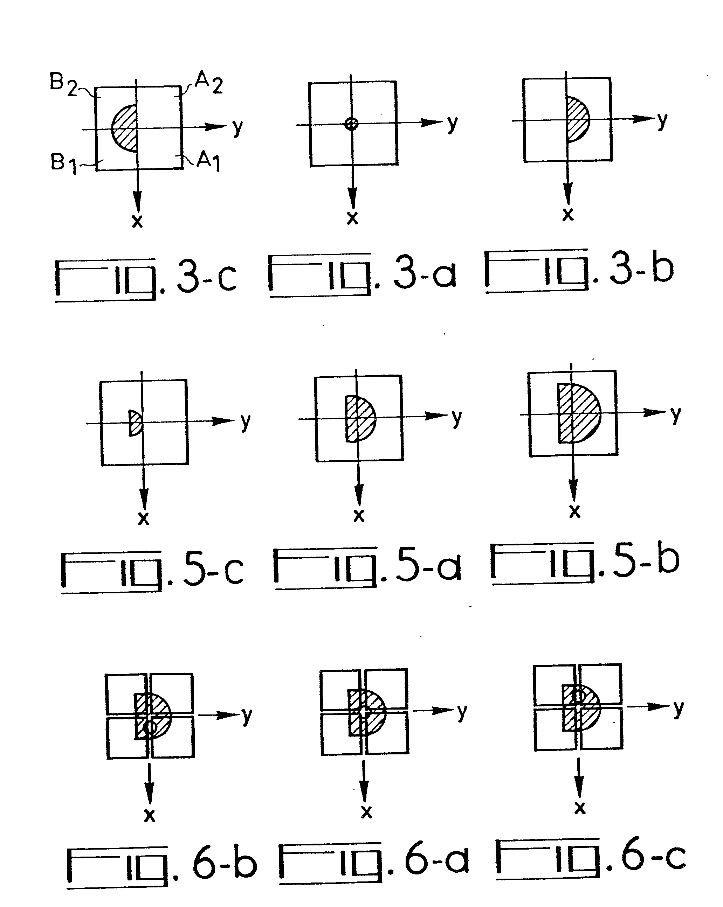

La figure 4 montre partiellement, un autre mode de réalisation dans lequel le plan des cellules de détection est situé à une cote plus élevée que la source. Seul, le demi objectif 11 éclairé par le faisceau de retour a été représenté. Le point de focalisation de ce faisceau est inchangé ($M'_0$, $M'_1$ ou $M'_2$ suivant que l'écart de focalisation est nul, négatif ou positif). Le plan des cellules $P_2$ étant plus éloigné de l'objectif 11, l'image formée dans ce plan est plus étendue. Ces cellules sont disposées de la manière décrite précédemment, les axes de séparation de ces cellules se coupant en un point situé au voisinage de la verticale passant par $M'_0$, de telle sorte que la somme des éclairements reçus par les cellules $A_1$ et $A_2$ ayant même ordonnée positive soit égale à la somme des éclairements reçus par les cellules $B_1$ et $B_2$ ayant même ordonnée négative, le signal d'écart de focalisation étant ainsi nul lorsque l'écart de focalisation est nul. La figure 5a représente la tache d'éclairement correspondante, les figures 5b et 5c représentant les taches d'éclairement correspondant respectivement à un écart négatif et à un écart positif. Ainsi le signal de lecture L, peut être obtenu par sommation des signaux issus des quatre cellules de détection $A_1$, $A_2$, $B_1$ et $B_2$ et le signal d'écart de focalisation $\varepsilon(z)$ par différence entre les sommes des signaux issus des groupes de deux cellules ayant même ordonnée $[(A_1 + A_2) - (B_1 + B_2)]$.

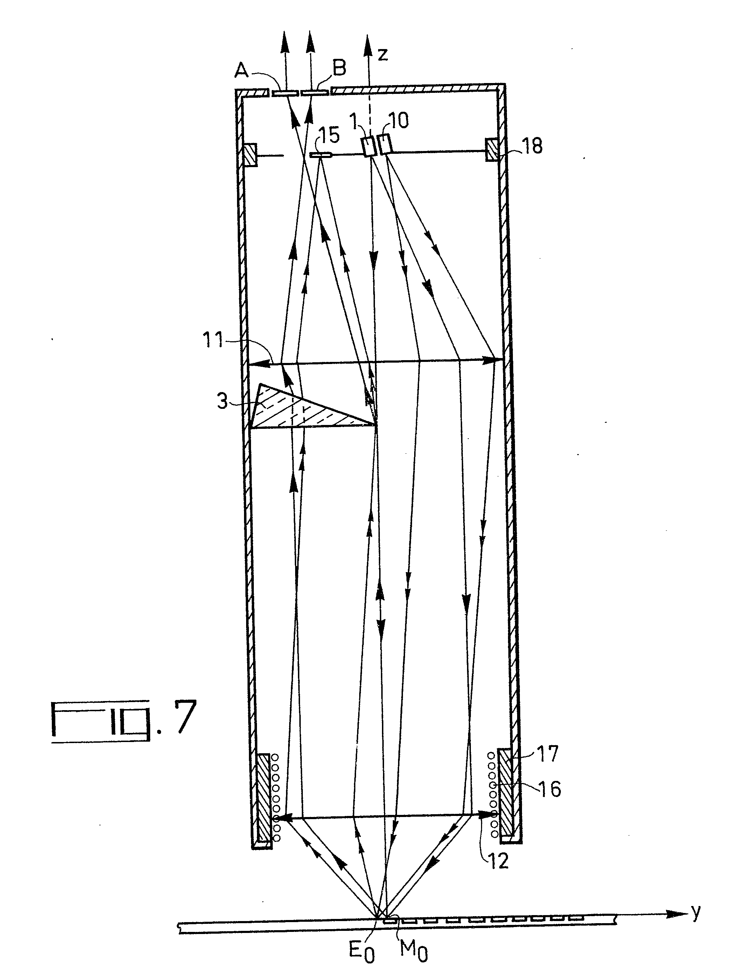

Le signal d'écart radial peut également être obtenu à partir des mêmes cellules de détection par différence de signaux obtenus par sommation des signaux provenant de cellules $A_1$, $B_1$ et $A_2$, $B_2$ ayant même abscisse. Ce signal $[(A_1 + B_1) - (A_2 + B_2)]$ n'est significatif que lorsqu'un trou est éclairé sur le support réfléchissant. En effet, dans ce cas, une baisse d'intensité globale est détectée au niveau du signal de lecture et suivant le signe de l'écart radial par rapport à la piste, cette baisse d'intensité se retrouve de façon prépondérante dans une baisse d'intensité affectant les cellules ayant même abscisse (suivant l'axe radial x) positive (Fig. 6b) ou négative (Fig. 6c) ou est répartie également entre ces deux groupes de cellules (l'écart radial étant alors nul), Fig. 6a.

Le dispositif représenté sur la figure 2 concerne une tête optique pour un dispositif de lecture de disque; la puissance du laser nécessaire pour une telle lecture est faible et peut donc être aisément obtenue au moyen d'un laser à semiconducteur. En utilisant pour le disque des couches d'inscription convenables il est également possible de prévoir une tête optique destinée à l'enregistrement de disque utilisant également une source laser à semiconducteur; dans ce cas, à la tête optique représentée sur la figure 2 il est également possible d'associer une source laser à semiconducteur pour l'enregistrement, la lecture d'un élément d'information pouvant alors être effectuée immédiatement après son enregistrement, par exemple pour un contrôle en temps réel de l'enregistrement, ou dans une phase postérieure.

La figure 7 représente une tête optique suivant l'invention permettant l'enregistrement et la lecture de l'information sur le disque.

Sur cette figure, les mêmes éléments que sur la figure 2 ont été désignés par les mêmes repères. En particulier, la partie lecture de la tête optique est exactement semblable à celle représentée sur la figure 2. De plus, le système optique formé des objectifs 11 et 12 est utilisé pour l'enregistrement et pour la lecture. La partie enregistrement comporte en outre une source laser à semiconducteur 10, décalée par rapport à l'axe optique des objectifs associés 11 et 12. Le courant de commande de cette source laser 10 est modulé par le signal $E_S$ à enregistrer sur le disque support. Cette modulation du laser se traduit par une modulation en tout ou rien du rayonnement émis qui permet la gravure dans la couche photosensible portée par le disque de microdomaines de longueur et d'espacement variables le long d'une piste en spirale dont le sens de défilement par rapport au spot d'écriture $E_0$ projeté sur le disque par le système optique 11 et 12 est déterminé par le sens de l'axe y. Ce point $E_0$ est situé avant le spot de lecture $M_0$ précédemment défini du fait du décalage de la source laser 10 par rapport à l'axe optique sur lequel était située la source laser de lecture 1. Comme la source laser de lecture 1, la source laser d'écriture n'éclaire qu'une demi-pupille de l'objectif d'entrée 1, cette disposition étant particulièrement adaptée aux caractéristiques de divergence du faisceau issu d'un laser à semiconducteur.

Une partie du rayonnement d'inscription non absorbée pour la gravure est réfléchie par le support et, dans un dispositif optique d'enregistrement et lecture en temps réel où les deux lasers fonctionnent simultanément, ce rayonnement d'inscription réfléchi par le support peut perturber la lecture. Pour éviter cet inconvénient un cache 15 est prévu pour occulter ce faisceau au point image $E'_0$ de $E_0$ par rapport au système optique formé des objectifs 11 et 12 et du prisme 3.

L'exploitation des signaux d'erreur verticale et d'erreur radiale peut être obtenue de la manière suivante: l'objectif 12 est rendu solidaire d'une bobine 16 placée dans l'entrefer d'un aimant permanent 17 tel que, lorsque cette bobine est parcourue par un courant fonction du signal $\varepsilon(z)$, une force entrainant un déplacement vertical de l'ensemble bobine-objectif 12 est créée. Les autres éléments de la tête optique, lasers 1 et 10, objectif 11, prisme 3 et cellules $A_1$, $A_2$, $B_1$, $B_2$ sont fixes suivant l'axe vertical z de la tête, le seul élément mobile suivant z étant cet ensemble bobine-objectif 12.

Pour effectuer le suivi de piste, au moyen du signal d'erreur radiale $\varepsilon(z)$, il est possible d'utiliser un élément mobile à commande électrique, du type piézo-électrique, solidaire d'un élément de la tête optique entrainant un déplacement radial suivant x du spot de lecture, c'est à dire soit la source laser à semiconducteur 1 elle-même, soit l'objectif 11. Un tel élément piézo-électrique 18 représenté sur la figure 7 solidaire des deux lasers 1 et 10 peut d'ailleurs permettre une vobulation radiale, lorsqu'un signal alternatif est superposé au signal d'erreur radiale $\varepsilon(x)$, le spot de lecture étant déplacé de part et d'autre de la piste poursuivie et le signal d'erreur étant obtenu par détection synchrone.

Sur la figure 7, représentant la tête optique elle-même les circuits de traitement de signal délivrant les signaux de commande appliqués aux différents éléments de la tête optique n'ont pas été représentés.

L'invention n'est pas limitée aux modes de réalisation de la tête optique précisément décrits et représentés. En particulier, pour une tête optique destinée à l'enregistrement et à la lecture, il est possible d'utiliser pour l'enregistrement une source laser multiple comportant plusieurs lasers à semiconducteur intégrés sur le même support, la distance entre les différents lasers étant telle qu'après imagerie par le système optique les spots projetés pour la gravure de plusieurs pistes parallèles soient correctement espacés.

De plus, dans les modes de réalisation représentés, la source laser de lecture a été représentée sur l'axe optique du dispositif de projection. Cette disposition n'est pas limitative et la source laser de lecture peut être placée en dehors de l'axe optique. A l'inverse, la source laser d'enregistrement peut être placée sur l'axe optique, dans le cas où la tête optique est utilisée quasi simultanément pour l'enregistrement et la lecture, il est seulement nécessaire que les spots se succèdent dans le bon ordre par rapport au sens de défilement du disque.

Il est également possible, au lieu d'éclairer par la source laser de lecture une zone limitée par un diamètre de la pupille d'entrée de décaler cette zone vers le centre, de façon à obtenir un spot plus régulier. Dans ce cas, l'élément déviateur sera décalé par rapport à l'axe et le faisceau réfléchi par le support sera utilisé seulement partiellement; dans ce cas un compromis doit être trouvé entre l'obtention d'une tache de lecture correcte et un niveau de détection suffisant sur les cellules de lecture.

**Revendications**

1. Tête de lecture optique à source à laser semiconducteur (1) de lecture comportant un dispositif optique de projection (12) destiné à former dans le plan d'un support d'information réfléchissant un spot de lecture, image de la source par ce dispositif, le laser (1) ayant une face émissive délimitée par une fenêtre rectangulaire, le faisceau issu du laser éclairant de façon dissymétrique la pupille d'entrée du dispositif optique de projection (12), caractérisé en ce que, la totalité du faisceau émis par la source à laser étant transmise au dispositif optique de projection (12), la face émissive du laser (1) présente un angle déterminé avec l'axe optique (Z) du dispositif optique de projection pour obtenir ladite dissymétrie, et le faisceau réfléchi par ledit support d'information éclaire également de façon dissymétrique la pupille d'entrée dudit dispositif, les portions de ladite pupille d'entrée éclairées par les deux faisceaux étant adjacentes et recouvrant la majeure partie de la surface de cette pupille; et en ce qu'elle comprend un élément déviateur (3) placé uniquement sur le trajet du faisceau réfléchi émergeant du dispositif de projection et déviant faiblement ce faisceau de manière à décaler l'image formée par réflexion sur le support d'information par rapport à la face émissive du laser (1), des cellules de détection ($A_1$ à $B_2$) étant prévues pour détecter le faisceau ainsi dévié.

2. Tête de lecture optique selon la revendication 1, caractérisé en ce que la source (1) éclaire la pupille d'entrée dans une demi-pupille, la fenêtre émissive rectangulaire de la source laser à semi-conducteur étant placée de façon que sa grande dimension soit orthogonale à l'axe (X) limitant les deux demi-pupilles.

3. Tête de lecture optique selon l'une des revendications 1 ou 2, caractérisée en ce que l'élément déviateur est un prisme situé sur le trajet du faisceau de retour dans une zone où la surface d'onde est plane ce prisme ayant son arête parallèle à l'axe (X) limitant les deux demi-pupilles.

4. Tête de lecture optique selon l'une quelconque des revendications 1 à 3, caractérisée en ce que le plan ($P_2$) des cellules de détection est placé orthogonalement à l'axe optique (Z) du dispositif de projection à une cote différente de celle de la face émissive de la source laser (1) ces cellules étant disposées dans quatre quadrants ($A_1$-$B_2$) limités par deux axes (X,Y) parallèles aux côtés de la fenêtre émissive de la source laser (1), ces quadrants étant tels que les rayonnements reçus par les quatre cellules sont égaux en l'absence d'erreur verticale et d'erreur radiale.

5. Tête de lecture optique selon l'une quelconque des revendications précédentes, caractérisée en ce qu'elle comporte en outre au moins une source laser a semi-conducteur d'enregistrement (10) associée au même dispositif de projection (12) et située à coté de la source à laser semi-conducteur de lecture (1) pour projeter sur le support d'information un spot d'enregistrement ($E_0$) décalé par rapport au spot de lecture ($M_0$), une telle tête permettant d'effectuer l'enregistrement et la lecture du support en simultanéité.

6. Tête de lecture optique selon la revendication 5, caractérisée en ce que la source laser d'enregistrement (10) est orientée de façon que la pupille d'entrée du dispositif de projection (12) soit éclairée par le faisceau d'enregistrement dans la même zone que celle éclairée par le faisceau de lecture, la partie non absorbée par le support d'information pour l'enregistrement étant réfléchie en suivant un trajet séparé du faisceau incident correspondant, un cache (15) étant prévu dans le plan de focalisation pour occulter ce faisceau sans perturber le faisceau réfléchi de lecture.

7. Dispositif de lecture par réflexion d'un support d'information comportant une tête de lecture optique selon l'une quelconque des revendications précédentes, caractérisé en ce que, l'information étant enregistrée sur le support d'information le long d'une piste, la tête de lecture est disposée par rapport au support de façon que la grande dimension de la fenêtre rectangulaire émissive de la source à laser semi-conducteur de lecture (1) soit comprise dans un plan parallèle à la direction (T) de défilement du support d'information par rapport à la tête optique.

8. Dispositif de lecture selon la revendication 7, comportant de plus une partie enregistrement caractérisé en ce que la source laser à semi-conducteur d'enregistrement (10) est décalée par rapport à l'axe optique (Z) suivant la direction (Y) de défilement de façon que le spot d'enregistrement ($E_0$) soit formé en avant du spot de lecture ($M_0$) eu égard au sens de défilement du support d'information par rapport à la tête optique.

**Patentansprüche**

1. Optischer Lesekopf mit Lese-Halbleiterlaserquelle (1), mit einer optischen Projektionsvorrichtung (12), die in der Ebene eines reflektierenden Signalträgers einen Lesepunkt erzeugt, der ein Bild der Quelle durch diese Vorrichtung darstellt, wobei der Laser (1) eine durch ein rechteckiges Fenster begrenzte Strahlfläche besitzt und das vom Laser ausgehende Strahlenbündel die Eingangspupille der optischen Projektionsvorrichtung (12) asymmetrisch beleuchtet, dadurch gekennzeichnet, dass wenn das gesamte von der Laserquelle abgegebene Strahlenbündel an die optische Projektionsvorrichtung (12) übertragen wird, die Strahlfläche des Lasers (1) mit der optischen Achse (Z) der optischen Projektionsvorrichtung einen bestimmten Winkel bildet, um die genannte Asymmetrie zu erzielen, wobei das vom Signalträger reflektierte Strahlenbündel ebenfalls asymmetrisch die Eingangspupille der genannten Vorrichtung beleuchtet, während von den beiden Strahlenbündeln beleuchteten Pupillenteile einander benachbart sind und den grössten Teil der Oberfläche dieser Pupille einnehmen, und dass der Lesekopf ein lediglich auf der Bahn des aus der Projektionsvorrichtung austretenden reflektierten Strahlenbündels angeordnetes Ablenkelement (3) aufweist, welches diese Strahlenbündel geringfügig ablenkt, derart, dass das durch Reflektion auf dem Signalträger erzeugte Bild in bezug auf die Strahlfläche des Lasers (1) versetzt wird, wobei Detektorzellen ($A_1$ bis $B_2$) zum Auffinden des derart abgelenkten Strahlenbündels vorgesehen sind.

2. Optischer Lesekopf nach Anspruch 1, dadurch gekennzeichnet, dass die Quelle (1) die Eingangspupille in einer Halbpupille beleuchtet, wobei das rechteckige Strahlfenster der Halbleiterlaserquelle derart angeordnet ist, dass seine längere Seite in bezug auf die die beiden Halbpupillen begrenzende Achse (X) orthogonal ist.

3. Optischer Lesekopf nach Anspruch 1 oder 2, dadurch gekennzeichnet, dass das Ablenkelement durch ein auf der Bahn Rückstrahlenbündels in einer Zone, in welcher die Wellenoberfläche eben ist, angeordnetes Prisma gebildet wird, dessen Kante zu der die beiden Halbpupillen begrenzenden Achse (X) parallel ist.

4. Optischer Lesekopf nach einem der Ansprüche 1 bis 3, dadurch gekennzeichnet, dass die Ebene (P₂) der Detektorzellen orthogonal in bezug auf die optische Achse (Z) der Projektionsvorrichtung ist, in einem Mass, das von demjenigen der Strahlfläche der Laserquelle (1) verschieden ist, wobei diese Zellen in vier durch zwei zu den Seiten des Strahlfensters der Laserquelle (1) verlaufende Achsen (X, Y) begrenzten Quadranten (A₁–B₂) angeordnet und derart ausgebildet sind, dass die von den vier Zellen empfangenen Strahlungen in Abwesenheit von vertikaler und radialer Abweichung gleich sind.

5. Optischer Lesekopf nach einem der vorangehenden Ansprüche, dadurch gekennzeichnet, dass er ferner wenigstens eine Aufnahme-Halbleiterlaserquelle (10) aufweist, die mit der gleichen Projektionsvorrichtung (12) zusammenwirkt und neben der Lese-Halbleiterlaserquelle (1) angeordnet ist, um auf den Signalträger einen in bezug auf den Lesepunkt (M₀) versetzten Aufnahmepunkt (E₀) zu projizieren, wobei ein derartiger Kopf es gestattet, den Signalträger gleichzeitig zur Aufnahme und zum Ablesen zu verwenden.

6. Optischer Lesekopf nach Anspruch 5, dadurch gekennzeichnet, dass die Aufnahme-Laserquelle (10) derart ausgerichtet ist, dass die Eingangspupille der Projektionsvorrichtung (12) vom Aufnahmestrahlenbündel und vom Lesestrahlenbündel in der gleichen Zone beleuchtet wird, wobei der vom Signalträger zur Aufnahme nicht absorbierte Teil reflektiert wird längs einer vom entsprechenden Einfallsstrahlenbündel verschiedenen Bahn, während die Maske (15) in der Fokalebene vorgesehen ist, um diese Strahlenbündel abzudecken, ohne das reflektierte Lesestrahlenbündel zu beeinträchtigen.

7. Reflektionslesevorrichtung mit Signalträger, die einen optischen Lesekopf nach einem der vorangehenden Ansprüche aufweist, dadurch gekennzeichnet, dass bei auf dem Signalträger längs einer Spur erfolgter Aufnahme des Signals der Lesekopf in bezug auf den Signalträger derart angeordnet ist, dass die längere Seite des rechteckigen Strahlfensters der Lese-Halbleiterlaserquelle (1) in einer Ebene, die parallel ist zur Bewegungsrichtung (T) des Signalträgers in bezug auf den optischen Lesekopf sich befindet.

8. Lesevorrichtung nach Anspruch 7, die ferner einen Aufnahmeteil besitzt, dadurch gekennzeichnet, dass die Aufnahme-Halbleiterlaserquelle (10) in bezug auf die optische Achse (Z) in der Bewegungsrichtung (Y) derart versetzt ist, dass der Aufnahmepunkt (E₀) in bezug auf die Richtung der Bewegung des Signalträgers gegenüber dem optischen Kopf vor dem Lesepunkt (M₀) erzeugt wird.

## Claims

1. Optical read head with a reading semiconductor laser source (1) comprising an optical projection device (12) adapted to produce in the plane of a reflecting information support a reading spot which is the image of the source by said device, the laser (1) having an emitting face delimited by a rectangular window, the beam issuing from the laser lighting in a dissymetrical manner the inlet pupil of the optical projection device (12), characterized in that, while the entire beam emitted by the laser source is transmitted to the optical projection device (12), the emitting face of the laser (1) defines a determined angle with the optical axis (Z) of the optical projection device for obtaining said dissymetry, and the beam reflected by said information support lights also in a dissymetrical manner the inlet pupil of said device, those portions of said inlet pupil which are lighted by two beams being adjacent to each other and covering the major portion of the surface of said pupil; and in that it comprises a deviating element (3) which is placed only on the path of the reflected beam issuing from the projection device and which deviates slightly said beam so as to shift the image produced by reflection on the information support with respect to the emitting face of the laser (1), while detection cells (A₁ to B₂) are provided for detecting the thus deviated beam.

2. Optical read head according to claim 1, characterized in that the source (1) lights the inlet pupil in a semi-pupil, the rectangular emitting window of the semiconductor laser source being arranged in such a manner that its large dimension is orthogonal to the axis (X) limiting the two semi-pupils.

3. Optical read head according to one of claims 1 or 2, characterized in that the deviating element is a prism located on the path of the return beam in a zone wherein the wave surface is planar, said prism having its edge in a position parallel to the axis (X) limiting the two semi-pupils.

4. Optical read head according to any one of claims 1 to 3, characterized in that the plane (P₂) of the detection cells is orthogonal to the optical axis (Z) of the projection device to a level different from that of the emitting face of the laser source (1), said cells being disposed in four quadrants (A₁–B₂) limited by two axes (X, Y) parallel to the sides of the emitting window of the laser source (1), these quadrants being so designed that the radiations received by the four cells are equal in the absence of a vertical error or a radial error.

5. Optical read head according to any one of the preceding claims, characterized in that it further comprises at least one recording semiconductor laser source (10) associated to the same projection device (12) and located beside the reading semiconductor laser source (1) for projecting onto the information support a recording spot (E₀) shifted with respect to the reading spot (M₀), such head enabling to use the support for simultaneous recording and reading.

6. Optical read head according to claim 5, characterized in that the recording laser source (10) is oriented in such a manner that the inlet pupil of the projection device (12) is lighted by the recording beam in the same zone as the one lighted by the reading beam, the portion which is not absorbed by the information support for the recording being reflected along a path different from the corresponding incident beam, a mask (15) being provided in the focusing plane for masking said beam without disturbing the reflected reading beam.

7. Reading device operating by reflection from an information support, comprising an optical read head according to any one of the preceding claims, characterized in that, the information being recorded on the information support along a track, the read head is arranged with respect to the support in such a manner that the large dimension of the rectangular emitting window of the reading semiconductor laser source (1) is comprised in a plane parallel to the direction (T) of the displacement of the information support with reference to the optical head.

8. Reading device according to claim 7, further comprising a recording section, characterized in that the recording semiconductor laser source (10) is shifted with respect to the optical axis (Z) in the direction (Y) of displacement, in such a manner that the recording spot ($E_0$) is formed before the reading spot ($M_0$), with reference to the direction of displacement of the information support relative to the optical head.

Fig. 1

Fig.4

Fig.2

Fig. 3-c  Fig. 3-a  Fig. 3-b

Fig. 5-c  Fig. 5-a  Fig. 5-b

Fig. 6-b  Fig. 6-a  Fig. 6-c

Fig. 7